# EUROPÄISCHE PATENTSCHRIFT

(11) **EP 1 797 340 B1**
(45) Veröffentlichungstag und Bekanntmachung des Hinweises auf die Patenterteilung: **08.04.2009**
(21) Anmeldenummer: 05779236.8
(22) Anmeldetag: 12.08.2005
(51) Int. Cl.: F16B 5/02, F16H 57/00, F16F 15/12

(54) **VERBINDUNGSEINRICHTUNG**
CONNECTION DEVICE
DISPOSITIF DE CONNEXION

(30) Priorität: 30.09.2004 DE 102004047471
(43) Veröffentlichungstag der Anmeldung: 20.06.2007
(73) Patentinhaber: ROBERT BOSCH GMBH, 70442 Stuttgart (DE)
(72) Erfinder: MOENCH, Jochen, 76547 Sinzheim (DE); BERNAUER, Christof, 76596 Hundsbach (DE)
(86) Internationale Anmeldenummer: PCT/EP2005/053988
(87) Internationale Veröffentlichungsnummer: WO 2006/034920

(56) Entgegenhaltungen:
- DE-A1- 4 235 728
- DE-A1- 19 720 254
- DE-A1- 19 916 098
- US-A- 4 921 371

## Beschreibung

### Stand der Technik

Die Erfindung betrifft eine Verbindungseinrichtung zur mechanischen Verbindung eines Motorgehäuses eines Motors mit einem Getriebegehäuse eines Getriebes, speziell eine Verbindungseinrichtung zur Verbindung eines Motorgehäuses eines Elektromotors mit einem Getriebegehäuse eines Getriebes zur Bildung eines Hilfsantriebs für Kraftfahrzeuge.

Aus der DE 197 20 254 A1 ist eine elektromotorische Antriebseinheit bekannt, bei der das Motorgehäuse eines Motors mit dem Getriebegehäuse eines Getriebes verbunden ist, wobei der Motor über eine Motorwelle auf das Getriebe einwirkt. Um die Übertragung von störenden Geräuschen der elektromotorischen Antriebseinheit auf nachgeordnete Gehäuse zu verhindern, ist bei der DE 197 20 254 A1 eine Kopplungsvorrichtung vorgesehen, die die elektromotorische Antriebseinheit mit einem weiteren Gehäuseteil verbindet. Hierzu weist die bekannte Kopplungsvorrichtung ein Verbindungsglied auf, das mit Spiel oder geringer Anlagefläche einen Sprung der akustischen Impedanzen im Schalllaufweg bewirkt und damit eine starke Dämpfung des übertragenen Schalls erreicht. Die Anlagefläche kann dabei insbesondere punkt- oder linienförmig ausgebildet sein.

Bei der aus der DE 197 20 254 A1 bekannten Kopplungsvorrichtung erfolgt die Schwingungsentkopplung an der Schnittstelle zwischen der elektromotorischen Antriebseinheit, d.h. dem Stellantrieb, und dem angetriebenen System. Auf Grund der bei dieser Schnittstelle wirkenden Betriebskräfte und Drehmomente ist allerdings eine hohe mechanische Festigkeit der Kopplungsvorrichtung erforderlich. Ferner ist die Entkopplung im oberen Lastbereich nicht ausreichend oder aufwendig zu realisieren und daher mit erhöhten Kosten verbunden. Außerdem ist es nicht in jedem Anwendungsfall möglich, die Verbindung mit Spiel oder geringer Anlagefläche auszuführen, insbesondere bei der Übertragung größerer Betriebskräfte und Drehmomente.

### Vorteile der Erfindung

Die erfindungsgemäße Verbindungseinrichtung mit den Merkmalen des Anspruchs 1 hat demgegenüber den Vorteil, dass die Verbindungseinrichtung zur Schwingungsentkopplung zwischen dem Motorgehäuse und dem Getriebegehäuse angeordnet ist. Dadurch wird verhindert, dass die von dem Motor erzeugten Schwingungen in das Getriebe eingeleitet werden, so dass eine durch die Schwingungen des Motors hervorgerufene Schwingungsanregung des Getriebes von vornherein verhindert wird. Außerdem hat die erfindungsgemäße Lösung den Vorteil, dass bei der Entkopplung zwischen dem Motorgehäuse und dem Getriebegehäuse geringere Betriebskräfte und Drehmomente über die Verbindungseinrichtung übertragen werden als bei einer Entkopplung der Motor-Getriebe-Antriebseinheit von einem nachgeordneten Gehäuse.

Durch die in den Unteransprüchen aufgeführten Maßnahmen sind vorteilhafte Weiterbildungen der im Anspruch 1 angegebenen Verbindungseinrichtung möglich.

In vorteilhafter Weise ist das Verbindungselement in einer bezüglich der Achse der Motorwelle radialen Richtung zumindest im Wesentlichen starr ausgebildet. Schwingungen des Motorgehäuses entstehen insbesondere durch den mit einer gewissen Drehfrequenz drehenden Motor. Da das Verbindungselement so ausgebildet ist, dass es bei einer Drehbewegung des Motorgehäuses um eine durch die Motorwelle vorgegebene Achse relativ zu dem Getriebegehäuse zumindest teilweise elastisch verformbar ist, werden die durch die Drehbewegung des Motors entstehenden Schwingungen zumindest im Wesentlichen entkoppelt. Bei einer Verkippung des Motorgehäuses relativ zur idealen Achse der Motorwelle kann es zu einer Unwucht des Elektromotors, einer Durchbiegung der Motorwelle oder dgl. kommen, was eine Ursache für die Entstehung von Schwingungen ist. Durch die zumindest im Wesentlichen starre Ausbildung des Verbindungselementes in radialer Richtung wird ein Verkippen des Motorgehäuses relativ zu dem Getriebegehäuse verhindert, so dass einer Ursache für die Entstehung von Schwingungen abgeholfen wird.

In vorteilhafter Weise ist das Verbindungselement in einer bezüglich der Achse der Motorwelle axialen Richtung zumindest im Wesentlichen elastisch verformbar ausgebildet. In axialer Richtung ist die Motorwelle bereits durch das Lager zumindest teilweise von dem Motorgehäuse entkoppelt. Allerdings kann es durch einen Planschlag im Lager des Elektromotors und/oder durch Momentenwelligkeiten des Elektromotors auch zu axialen Schwingungen des Motorgehäuses kommen. Durch die elastische Verformbarkeit des Verbindungselementes in axialer Richtung können auch diese Schwingungen wirksam gedämpft werden.

Vorteilhaft ist es, dass das Verbindungselement so ausgebildet ist, dass das Motorgehäuse axial beabstandet mit dem Getriebegehäuse verbindbar ist. Durch das Anliegen oder Anschlagen des Motorgehäuses an das Getriebegehäuse bei Vibrationen des Elektromotors können erhebliche Schwingungen des Getriebegehäuses verursacht werden. Durch die genannte Ausgestaltung kann ein definierter Abstand zwischen dem Getriebegehäuse und dem Motorgehäuse geschaffen werden, wodurch das Entstehen bzw. die Übertragung von Körperschall verhindert ist.

Es ist möglich, dass das Verbindungselement zum Verbinden des Motorgehäuses eines Elektromotors mit dem Getriebegehäuse dient und dass das Verbindungselement mit dem Bürstensystemteil des Elektromotors verbunden ist. Das Bürstensystemteil kann dabei in ein Gehäuseteil des Elektromotors eingesteckt und zusätzlich mittels einer Schraubverbindung mit diesem verbunden sein. Durch das Bürstensystemteil kann ein aus Kunststoff bestehender Teil des Motorgehäuses ausgebildet sein, so dass insbesondere bei einem aus Kunststoff bestehenden Verbindungselement die Verbindung mit dem Motorgehäuse auf einfache Weise, insbesondere durch Anspritzen, erfolgen kann.

Vorteilhaft ist es ferner, dass das Verbindungselement U-förmig ausgebildet ist. Dabei ist es weiter vorteilhaft, dass das Verbindungselement einen ersten und zweiten Schenkel aufweist, die durch einen Steg miteinander verbunden sind. Je nach Elastizität des Steges und der beiden Schenkel können gezielt die Elastizitätswerte für ein gegeneinander Verschwenken der beiden Schenkel in den verschiedenen Raumrichtungen beeinflusst werden.

Dabei ist es weiter vorteilhaft, dass das Verbindungselement im Bereich einer Stirnfläche des ersten Schenkels mit dem Motorgehäuse und im Bereich einer Stirnfläche des zweiten Schenkels mit dem Getriebegehäuse verbindbar ist. Durch diese Art der Verbindung lässt sich die Elastizität bzw. Steifigkeit und damit die Dämpfungswirkung des Verbindungselementes jeweils in axialer Richtung, radialer Richtung und Drehrichtung einzeln vorgeben, wobei in den drei genannten Richtungen auch gezielt sich deutlich unterscheidende charakteristische Eigenschaften vorgebbar sind.

Je nach Anwendungsfall kann das Verbindungselement zumindest teilweise aus einem elastischen Kunststoff ausgebildet sein. Das Verbindungselement kann auch aus einem Metall, insbesondere als Federsteg, ausgeführt sein. Alternativ oder zusätzlich kann das Verbindungselement auch mit einem viskoelastischen Material beschichtet sein.

### Zeichnung

Ausführungsbeispiele der Erfindung sind in den beigefügten Zeichnungen vereinfacht dargestellt und in der nachfolgenden Beschreibung näher erläutert. Es zeigt:
Fig. 1 ein erstes Ausführungsbeispiel einer erfindungsgemäßen Verbindungseinrichtung, die ein Motorgehäuse mit einem Getriebegehäuse verbindet; und
Fig. 2 ein Verbindungselement einer erfindungsgemäßen Verbindungseinrichtung gemäß einem zweiten Ausführungsbeispiel.

### Beschreibung der Ausführungsbeispiele

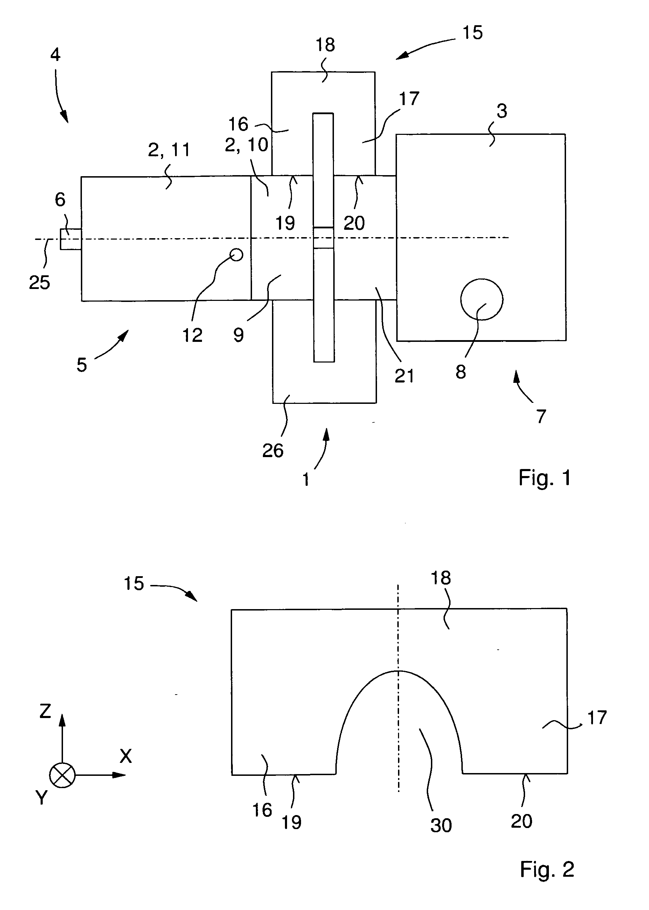

Fig. 1 zeigt in einer schematischen Darstellung eine erfindungsgemäße Verbindungseinrichtung 1 zur mechanischen Verbindung eines Motorgehäuses 2 mit einem Getriebegehäuse 3. Durch die Verbindung ist eine Motor-Getriebe-Antriebseinheit 4 ausgebildet, die vorzugsweise als Hilfsantrieb, insbesondere als elektrischer Stellantrieb, in Kraftfahrzeugen zur Sitzverstellung, zur Fremdkraftbetätigten Bewegung von Dachteilelementen, Fenster und dgl. dient. Die erfindungsgemäße Verbindungseinrichtung 1 eignet sich jedoch auch für andere Anwendungsfälle.

In dem in der Fig. 1 dargestellten ersten Ausführungsbeispiel verbindet die Verbindungseinrichtung 1 das Motorgehäuse 2 eines als Elektromotor ausgebildeten Motors 5 mit dem Getriebegehäuse 3. Der Motor 5 weist eine Motorwelle 6 auf, über die der Motor 5 auf ein in dem Getriebegehäuse 3 angeordnetes Getriebe 7 einwirkt. Die Betriebskräfte und Drehmomente des Motors 5 werden dadurch auf das Getriebe 7 übertragen und von diesem umgesetzt. Die umgesetzten Betriebskräfte und Drehmomente sind an dem Abtrieb 8 der Antriebseinheit 4 abgreifbar.

Der Motor 5 weist außerdem ein Bürstensystemteil 9 auf, dessen Gehäuse 10 zusammen mit einem Gehäuseteil 11 des Motors 5 das Motorgehäuse 2 bildet. Das Bürstensystemteil 9 ist dabei in den Gehäuseteil 11 des Motors 5 eingesteckt und an einer oder mehreren Befestigungsstellen 12 mit dem Gehäuseteil 11 mittels einer Schraubverbindung verbunden.

Die Verbindungseinrichtung 1 weist ein Verbindungselement 15 auf, das U-förmig ausgebildet ist. Das Verbindungselement 15 umfasst einen ersten Schenkel 16, einen zweiten Schenkel 17 und einen Steg 18, wobei der Steg 18 den ersten Schenkel 16 mit dem zweiten Schenkel 17 verbindet. Das Verbindungselement 15 ist im Bereich einer Stirnfläche 19 des ersten Schenkels 16 mit dem Gehäuse 10 des Bürstensystemteils 9 und somit mit dem Motorgehäuse 2 des Motors 5 verbunden. Das Gehäuse 10 des Bürstensystemteils 9 ist vorzugsweise aus Kunststoff ausgebildet, um die Verbindung des ersten Schenkels 16 mit dem Motorgehäuse 2 im Bereich der Stirnfläche 19 zu erleichtern. Falls zumindest der erste Schenkel 16 des Verbindungselementes 15 aus Kunststoff ausgebildet ist, dann kann das Verbindungselement 15 im Bereich der Stirnfläche 19 an das Gehäuse 10 des Bürstensystemteils 9 angespritzt sein.

Ferner ist das Verbindungselement 15 im Bereich einer Stirnfläche 20 des zweiten Schenkels 17 mit einem Gehäuseteil 21 des Getriebegehäuses 3 verbunden. Entsprechend dem Gehäuse 10 des Bürstensystemteils 9 kann auch das Gehäuseteil 21 des Getriebegehäuses 3 aus Kunststoff ausgebildet sein, um die Verbindung mit dem zweiten Schenkel 17 zu erleichtern und insbesondere das Anspritzen eines aus Kunststoff ausgebildeten zweiten Schenkels 17 an das Gehäuseteil 21 zu ermöglichen.

Beim Anfahren des Motors 5 wird die Motorwelle 6 in Drehung versetzt, wodurch die mit der Drehachse des Motors 5 zusammenfallende Achse 25 der Motorwelle 6 definiert ist.

In dem in der Fig. 1 dargestellten ersten Ausführungsbeispiel ist neben dem Verbindungselement 15 noch ein weiteres Verbindungselement 26 vorgesehen, wobei die beiden Verbindungselemente symmetrisch zu der Achse 25 und gegeneinander um 180° versetzt angeordnet sind. Zur Vereinfachung der Darstellung sind in dem ersten Ausführungsbeispiel zwei Verbindungselemente 15, 26 dargestellt. Bei der Anordnung des Motorgehäuses 2 zu dem Getriebegehäuse 3 entsprechend dem ersten Ausführungsbeispiel sind jedoch drei Verbindungselemente, die symmetrisch zur Achse 25 angeordnet sind und gegeneinander um 120° versetzt angeordnet sind für eine statisch bzw. geometrisch bestimmte Anordnung erforderlich, so dass vorzugsweise diese Ausgestaltung gewählt ist. Eine weitere bevorzugte Ausführung ergibt sich mit vier Verbindungselementen, die symmetrisch zur Achse 25 und gegeneinander um 90° versetzt angeordnet sind. Die Verbindungseinrichtung 1 kann jedoch auch in einer anderen Anordnung mit einem oder mehreren Verbindungselementen 25, 26 ausgestaltet sein.

Die Verbindungselemente 15, 26 der Verbindungseinrichtung 1 sind so ausgebildet, dass sie bei einer Drehbewegung des Motorgehäuses 2, die um die Achse 25 und relativ zu dem Getriebegehäuse 3 erfolgt, elastisch verformbar sind. Dabei kann der erste Schenkel 16 und/oder der zweite Schenkel 17 verbiegbar sowie der Steg 18 verdrehbar ausgebildet sein. Durch die Verbindungseinrichtung 1 ist außerdem ein axialer Abstand zwischen dem Getriebegehäuse 3 und dem Motorgehäuse 2 geschaffen. Die Verbindungselemente 15, 26 der Verbindungseinrichtung 1 können in Bezug auf eine axiale, d.h. in Richtung der Achse 25, erfolgende Bewegung des Motorgehäuses 2 relativ zu dem Getriebegehäuse 3 starr ausgebildet sein, so dass der axiale Abstand im Wesentlichen konstant ist. Vorzugsweise ist die Verbindungseinrichtung aber auch in axialer Richtung elastisch ausgebildet, so dass sich der axiale Abstand zwischen dem Motorgehäuse 2 und dem Getriebegehäuse 3 beim Auftreten von Vibrationen etwas ändern kann. Außerdem ist die Verbindungseinrichtung 1 so ausgestaltet, dass die Achse 25 der Motorwelle 6 in ihrer Ausgangslage gehalten ist. Insbesondere sind die Verbindungselemente 15, 26 im Hinblick auf radiale Verstellkräfte des Motorgehäuses 2 relativ zu dem Getriebegehäuse 3 starr ausgebildet.

Die Verbindungseinrichtung 1 entkoppelt gezielt Schwingungen, die von dem Motor 5 ausgehen, wobei die Entkopplung nur gezielt in bestimmten Richtungen erfolgt und in anderen Richtungen eine steife Verbindung erhalten bleibt. Hierzu können die Verbindungselemente 15, 26 der Verbindungseinrichtung 1 als Federlaschen ausgebildet sein, die in zwei Raumrichtungen steif und in einer Raumrichtung weich sind. Dadurch wird eine wesentlich niedrigere Schwingungsamplitude der Antriebseinheit 4 erzielt, wodurch Geräuschemissionen durch Luft- und speziell durch Körperschall vermindert sind. Speziell werden die auf der Motorseite entstehenden Schwingungen durch Planschlag, Unwucht oder Durchbiegung der Motorwelle 6, Momentwelligkeiten des Motors 5 und mechanische Bürstenanregungen des Bürstensystems 9 von der Getriebeseite entkoppelt. Auf der Getriebeseite werden speziell Schwingungen auf Grund Unwucht, Durchbiegung oder Planschlag der getriebeseitigen Welle, durch Zahnkräfte, Verzahnungsfehler, Unrundheiten, Momentwelligkeiten und Reibungskräfte des Getriebes 7 von der Motorseite entkoppelt. Außerdem wird eine direkte Übertragung des Körperschalls vom Motorgehäuse 2 auf das Getriebegehäuse 3 bzw. vom Getriebegehäuse 3 auf das Motorgehäuse 2 durch die Verbindungseinrichtung 1 verhindert.

Fig. 2 zeigt ein Verbindungselement 15 der Verbindungseinrichtung 1 gemäß einem zweiten Ausführungsbeispiel. Sich entsprechende Elemente sind dabei mit übereinstimmenden Bezugszeichen versehen. Außerdem gelten die nachfolgenden Ausführungen in entsprechender Weise auch für die Verbindungselemente 15, 26 des in Fig. 1 dargestellten Ausführungsbeispiels der Verbindungseinrichtung 1.

Das Verbindungselement 15 ist in einer Z-Richtung im Wesentlichen starr ausgebildet. D.h., das Verbindungselement 15 verhält sich bei einer Verschiebung des ersten Schenkels 16 relativ zu dem zweiten Schenkel 17 in Z-Richtung im Wesentlichen starr. Bei einer Verschiebung des ersten Schenkels 16 relativ zu dem zweiten Schenkel 17 in einer X-Richtung verhält sich das Verbindungselement 15 ebenfalls im Wesentlichen starr. Vorzugsweise kann es sich in X-Richtung aber auch etwas elastisch verhalten. Das Verbindungselement 15 ist weiter so ausgestaltet, dass eine elastische Verbiegung des Steges 18 bei einer Verschiebung des ersten Schenkels 16 relativ zu dem zweiten Schenkel 17 in einer Y-Richtung erfolgt. Dabei kann auch eine teilweise Verbiegung des ersten Schenkels 16 und/oder des zweiten Schenkels 17 erfolgen. Das Verbindungselement 15 weist eine geringe Dicke auf, d.h., die Ausdehnung in Y-Richtung ist verglichen mit den Ausdehnungen in X-Richtung und Z-Richtung klein.

Im montierten Zustand der Verbindungseinrichtung 1, in dem das Motorgehäuse 2 mit dem Getriebegehäuse 3 mittels der Verbindungseinrichtung 1 verbunden ist, ist die X-Richtung parallel zur Achse 25 orientiert, die Z-Richtung zeigt bezüglich der Achse 25 in eine radiale Richtung und die Y-Richtung steht senkrecht auf der X-Richtung und der Z-Richtung. Die Y-Richtung zeigt daher in eine Umfangsrichtung in Bezug auf die Achse 25.

Das Verbindungselement 15 weist eine Aussparung 30 auf. Im Bereich der Aussparung 30 ist das Verbindungselement 15 konkav, d.h. entsprechend einem Hohlspiegel, ausgebildet. Die Aussparung 30 hat dabei zumindest näherungsweise die Form eines Ellipsoids. Speziell kann die Form der Aussparung 30 durch eine Finite-Elemente-Rechnung bestimmt werden, um eine gleichmäßige Kraftverteilung, insbesondere im Bereich des Steges 18, zu erreichen. Durch die Form des Steges 18 kann die gewünschte Dämpfungseigenschaft, insbesondere hinsichtlich des Entkopplungsfrequenzbereiches, vorgegeben werden. Allgemein kann die Entkopplungswirkung bzw. der Entkopplungsfrequenzbereich der Verbindungseinrichtung 1 über die Geometrie und/oder die Wahl eines oder mehrerer Materialien des Verbindungselementes 15 eingestellt werden, wobei sich die Steifigkeit in den Richtungen X, Y und Z unterschiedlich vorgeben lässt, um die Gehäuse 2, 3 in Hinblick auf unterschiedliche Schall- bzw. Kraftübertragungen in den unterschiedlichen Raumrichtungen X, Y und Z geeignet zu entkoppeln.

Denkbare Materialien für das Entkopplungselement sind Gummielemente, wie sie üblicherweise zur Geräuschreduzierung eingesetzt werden. Denkbar sind auch Metallfederelemente. Vorzugsweise werden die Elemente aus Kunststoff gespritzt und als Federsteg ausgeführt. Speziell können diese Federstege einstückig mit dem Gehäuseteil 21 des Getriebegehäuses 3 und/oder dem Gehäuse 10 des Bürstensystemteils 9 bzw. dem Getriebegehäuse 3 gespritzt sein.

Die Verbindungseinrichtung 1 kann auch in Kombination mit einer Entkopplung bzw. Trennung der Motorwelle 6 von der zugehörigen (nicht dargestellten) Welle des Getriebegehäuses 3 erfolgen. Dies ist beispielsweise mittels einer Balgkupplung oder einer Elastomerkupplung möglich.

Zur Ausbildung des Verbindungselementes 15 können thermoplastische Kunststoffe dienen, speziell kann auch Polyamid eingesetzt werden. Zur Verbindung der Verbindungselemente 15, 26 mit dem Motorgehäuse 2 und/oder dem Getriebegehäuse 3 kann auch im Bereich der Stirnflächen 19, 20 des Verbindungselements 15 bzw. den entsprechenden Stirnflächen des Verbindungselementes 26 eine Aussparung in dem Motorgehäuse 2 bzw. dem Getriebegehäuse 3 ausgebildet sein.

Die Erfindung ist nicht auf die beschriebenen Ausführungsbeispiele beschränkt.

## Patentansprüche

1. Verbindungseinrichtung (1) zur mechanischen Verbindung eines Motorgehäuses (2) eines Motors (5) mit einem Getriebegehäuse (3) eines Getriebes (7), wobei der Motor (5) über eine Motorwelle (6) auf das Getriebe (7) einwirkt,
**dadurch gekennzeichnet,**
**dass** zumindest ein Verbindungselement (15, 26) vorgesehen ist, mittels dem das Motorgehäuse (2) mittelbar mit dem Getriebegehäuse (3) verbindbar ist, und
**dass** das Verbindungselement (15, 26) so ausgebildet ist, dass es bei einer Drehbewegung des Motorgehäuses (2) um eine durch die Motorwelle (6) vorgegebene Achse (25) relativ zu dem Getriebegehäuse (3) zumindest teilweise elastisch verformbar ist.

2. Verbindungseinrichtung nach Anspruch 1,
**dadurch gekennzeichnet,**
**dass** das Verbindungselement (15, 26) in einer bezüglich der Achse (25) der Motorwelle (6) radialen Richtung (Z) zumindest im Wesentlichen starr ausgebildet ist.

3. Verbindungseinrichtung nach Anspruch 1 oder 2,
**dadurch gekennzeichnet,**
**dass** das Verbindungselement (15, 26) in einer bezüglich der Achse (25) der Motorwelle (6) axialen Richtung (X) zumindest im Wesentlichen elastisch verformbar ausgebildet ist.

4. Verbindungseinrichtung nach einem der Ansprüche 1 bis 3,
**dadurch gekennzeichnet,**
**dass** das Verbindungselement (15, 26) so ausgebildet ist, dass das Motorgehäuse (2) axial beabstandet mit dem Getriebegehäuse (3) verbindbar ist.

5. Verbindungseinrichtung nach einem der Ansprüche 1 bis 4,
**dadurch gekennzeichnet,**
**dass** das Verbindungselement (15, 26) U-förmig ausgebildet ist.

6. Verbindungseinrichtung nach Anspruch 5,
**dadurch gekennzeichnet,**
**dass** das Verbindungselement (15, 26) einen ersten Schenkel (16) und einen zweiten Schenkel (17) aufweist, die durch einen Steg (18) miteinander verbunden sind.

7. Verbindungseinrichtung nach Anspruch 6,
**dadurch gekennzeichnet,**
**dass** das Verbindungselement (15, 26) im Bereich einer Stirnfläche (19) des ersten Schenkels (16) mit dem Motorgehäuse (2) verbindbar ist.

8. Verbindungseinrichtung nach Anspruch 6 oder 7,
**dadurch gekennzeichnet,**
**dass** das Verbindungselement (15, 26) im Bereich einer Stirnfläche (20) des zweiten Schenkels (17) mit dem Getriebegehäuse (3) verbindbar ist.

9. Verbindungseinrichtung nach einem der Ansprüche 6 bis 8,
**dadurch gekennzeichnet,**
**dass** das Verbindungselement (15, 26) eine Aussparung (30) aufweist und dass das Verbindungselement (15, 26) im Bereich der Aussparung (30) zumindest im Wesentlichen konkav ausgebildet ist.

10. Verbindungseinrichtung nach Anspruch 9,
**dadurch gekennzeichnet,**
**dass** die Aussparung (30) teilweise in einer an einen Ellipsoiden angenäherten Form ausgebildet ist.

11. Verbindungseinrichtung nach einem der Ansprüche 1 bis 10,
**dadurch gekennzeichnet,**
**dass** das Verbindungselement (15, 26) zumindest teilweise aus einem elastischen Kunststoff ausgebildet ist.

12. Verbindungseinrichtung nach einem der Ansprüche 1 bis 11,
**dadurch gekennzeichnet,**
**dass** das Verbindungselement (15, 26) zumindest teilweise mit einem viskoelastischen Material beschichtet ist.

13. Verbindungseinrichtung nach einem der Ansprüche 1 bis 12,
**dadurch gekennzeichnet,**
**dass** das Verbindungselement (15, 26) in Beziehung zu seiner axialen Ausdehnung (X) und seiner radialen Ausdehnung (Z) in einer in Bezug zur Drehrichtung der Motorwelle (6) vorgegebenen Umfangsrichtung (Y) dünn ausgebildet ist.

## Claims

1. Connection device (1) for the mechanical connection of a motor housing (2) of a motor (5) to a gearbox casing (3) of a gearbox (7), wherein the motor (5) acts on the gearbox (7) via a motor shaft (6), **characterized in that** at least one connection element (15, 26), by means of which the motor housing (2) can be indirectly connected to the gearbox casing (3), is provided, and **in that** the connection element (15, 26) is designed in such a manner that it can be at least partially elastically deformed during a rotational movement of the motor housing (2) relative to the gearbox casing (3) about an axis (25) predetermined by the motor shaft (6).

2. Connection device according to Claim 1, **characterized in that** the connection element (15, 26) is of at least substantially rigid design in a radial direction (Z) with respect to the axis (25) of the motor shaft (6).

3. Connection device according to Claim 1 or 2, **characterized in that** the connection element (15, 26) is of at least substantially elastically deformable design in an axial direction (X) with respect to the axis (25) of the motor shaft (6).

4. Connection device according to one of Claims 1 to 3, **characterized in that** the connection element (15, 26) is designed in such a manner that the motor housing (2) can be connected to the gearbox casing (3) at a distance axially.

5. Connection device according to one of Claims 1 to 4, **characterized in that** the connection element (15, 26) is of U-shaped design.

6. Connection device according to Claim 5, **characterized in that** the connection element (15, 26) has a first limb (16) and a second limb (17) which are connected to each other by a web (18).

7. Connection device according to Claim 6, **characterized in that** the connection element (15, 26) can be connected to the motor housing (2) in the region of an end surface (19) of the first limb (16).

8. Connection device according to Claim 6 or 7, **characterized in that** the connection element (15, 26) can be connected to the gearbox casing (3) in the region of an end surface (20) of the second limb (17).

9. Connection device according to one of Claims 6 to 8, **characterized in that** the connection element (15, 26) has a cutout (30), and **in that** the connection element (15, 26) is of at least substantially concave design in the region of the cutout (30).

10. Connection device according to Claim 9, **characterized in that** the cutout (30) is partially designed in a shape approximate to an ellipsoid.

11. Connection device according to one of Claims 1 to 10, **characterized in that** the connection element (15, 26) is at least partially formed from a flexible plastic.

12. Connection device according to one of Claims 1 to 11, **characterized in that** the connection element (15, 26) is at least partially coated with a viscoelastic material.

13. Connection device according to one of Claims 1 to 12, **characterized in that** the connection element (15, 26) is of thin design in relation to its axial extent (X) and its radial extent (Z) in a circumferential direction (Y) predetermined with respect to the direction of rotation of the motor shaft (6).

## Revendications

1. Dispositif de connexion (1) pour la connexion mécanique d'un carter moteur (2) d'un moteur (5), comprenant un carter de transmission (3) d'une transmission (7), le moteur (5) agissant sur la transmission (7) par le biais d'un arbre de moteur (6),
**caractérisé en ce**
**qu'**au moins un élément de connexion (15, 26) est prévu, au moyen duquel le carter moteur (2) peut être connecté de manière indirecte au carter de transmission (3), et
en ce que l'élément de connexion (15, 26) est réalisé de telle sorte qu'il soit au moins en partie déformable élastiquement dans le cas d'un mouvement de rotation du carter moteur (2) autour d'un axe (25) prédéfini par l'arbre de moteur (6) par rapport au carter de transmission (3).

2. Dispositif de connexion selon la revendication 1,
**caractérisé en ce que**
l'élément de connexion (15, 26) est réalisé de manière au moins essentiellement rigide dans une direction (Z) radiale par rapport à l'axe (25) de l'arbre de moteur (6).

3. Dispositif de connexion selon la revendication 1 ou 2,
**caractérisé en ce que**
l'élément de connexion (15, 26) est réalisé de manière au moins sensiblement déformable élastiquement dans une direction (X) axiale par rapport à l'axe (25) de l'arbre de moteur (6).

4. Dispositif de connexion selon l'une quelconque des revendications 1 à 3,
**caractérisé en ce que**
l'élément de connexion (15, 26) est réalisé de telle sorte que le carter moteur (2) puisse être connecté au carter de transmission (3) à distance axiale.

5. Dispositif de connexion selon l'une quelconque des revendications 1 à 4,
**caractérisé en ce que**
l'élément de connexion (15, 26) est réalisé en forme de U.

6. Dispositif de connexion selon la revendication 5,
**caractérisé en ce que**
l'élément de connexion (15, 26) présente une première branche (16) et une deuxième branche (17), qui sont connectées l'une à l'autre par une âme (18).

7. Dispositif de connexion selon la revendication 6,
**caractérisé en ce que**
l'élément de connexion (15, 26) peut être connecté au carter moteur (2) dans la région d'une surface frontale (19) de la première branche (16).

8. Dispositif de connexion selon la revendication 6 ou 7,
**caractérisé en ce que**
l'élément de connexion (15, 26) peut être connecté au carter de transmission (3) dans la région d'une surface frontale (20) de la deuxième branche (17).

9. Dispositif de connexion selon l'une quelconque des revendications 6 à 8,
**caractérisé en ce que**
l'élément de connexion (15, 26) présente un évidement (30) et **en ce que** l'élément de connexion (15, 26) est réalisé avec une forme au moins essentiellement concave dans la région de l'évidement (30).

10. Dispositif de connexion selon la revendication 9,
**caractérisé en ce que**
l'évidement (30) est réalisé en partie avec une forme approximative d'ellipsoïde.

11. Dispositif de connexion selon l'une quelconque des revendications 1 à 10,
**caractérisé en ce que**
l'élément de connexion (15, 26) est réalisé au moins en partie en un plastique élastique.

12. Dispositif de connexion selon l'une quelconque des revendications 1 à 11,
**caractérisé en ce que**
l'élément de connexion (15, 26) est revêtu au moins en partie d'un matériau viscoélastique.

13. Dispositif de connexion selon l'une quelconque des revendications 1 à 12,
**caractérisé en ce que**
l'élément de connexion (15, 26) est mince par rapport à son étendue axiale (X) et à son étendue radiale (Z) dans une direction périphérique (Y) prédéfinie par rapport au sens de rotation de l'arbre de moteur (6).
